# EUROPÄISCHE PATENTSCHRIFT

(11) **EP 2 909 478 B1**
(45) Veröffentlichungstag und Bekanntmachung des Hinweises auf die Patenterteilung: **29.04.2020**
(21) Anmeldenummer: 13753859.1
(22) Anmeldetag: 29.08.2013
(51) Int. Cl.: F04B 13/00, F04B 17/04, F04B 43/02, F04B 53/10, F16K 15/06, F04B 43/04

(54) **VENTILBAUGRUPPE FÜR FÖRDEREINRICHTUNG**
VALVE ASSEMBLY FOR CONVEYING DEVICE
ENSEMBLE DE SOUPAPE POUR DISPOSITIF DE TRANSPORT

(30) Priorität: 22.10.2012 DE 102012219170
(43) Veröffentlichungstag der Anmeldung: 26.08.2015
(73) Patentinhaber: Robert Bosch GmbH, 70442 Stuttgart (DE)
(72) Erfinder: KNIS, Wolfram, 73529 Schwaebisch Gmuend (DE); WALETZEK, Christoph, 70327 Stuttgart (DE)
(86) Internationale Anmeldenummer: PCT/EP2013/067876
(87) Internationale Veröffentlichungsnummer: WO 2014/063853

(56) Entgegenhaltungen:
- DE-A1-102010 028 850
- US-A- 3 354 830
- US-A- 5 226 445

## Beschreibung

### Stand der Technik

DE 10 2012 211 875 betrifft ein Fördermodul für einen Betriebs-/ Hilfsstoff zur Nachbehandlung von Abgas. Es wird eine Einrichtung zur Förderung eines flüssigen Mediums vorgeschlagen, wobei das flüssige Medium Gas-/Luft- oder Dampfanteile enthält. Die Einrichtung fördert das flüssige Medium im Pumpenmodus in eine Pumprichtung und im Rücksaugmodus in eine Rücksaugrichtung. Eine Ansteuereinrichtung betätigt im Fördermodus in Pumprichtung einen Hubmagneten einer Fördermembran und im Rücksaugmodus in Rücksaugrichtung einen Rücksaugpumpenmagneten einer Rücksaugfördermembran. Die Drucküberwachung erfolgt über eine Auswertung der Stromverläufe von Magneten in einer Ansteuereinrichtung.

US 3,354,830 bezieht sich auf eine Membranförderpumpe zum Pumpen eines aromaverleihenden Sirups und anderer Flüssigkeiten, die einen variablen Hub aufweist. Dies wird durch eine Variation der Kolbenverdrängung erreicht. Die Membranförderpumpe umfasst Steuerventile, die austauschbar im Pumpengehäuse angeordnet sind, die mit einer Vakuumkammer verbunden sind, sodass eine einfache Reinigung und Reparatur ermöglicht wird.

US 5,226,445 bezieht sich auf ein Ventil mit einer konvexen Dichtfläche und einer konkaven Ventilsitzfläche. Die Dichtfläche ist konvex gestaltet und ermöglicht eine konvexe Diskontinuität in eine sich axial erstreckende Richtung. Die Dichtfläche entspricht näherungsweise demselben Betrag einer Kontaktfläche mit der Sitzfläche bei nicht ausgerichtetem Kolben.

### Darstellung der Erfindung

Erfindungsgemäß wird eine Fördereinrichtung zum Eindosieren eines Betriebs-/Hilfsstoffs in einen Abgastrakt einer Verbrennungskraftmaschine mit einer Ventilbaugruppe vorgeschlagen, mit einem ansaugseitigem Ventil und einem druckseitigen Ventil, die jeweils federbeaufschlagte Kolben aufweisen, wobei die Kolben jeweils flexible Dichtlippen aufweisen und einen durch eine Fördermembran beaufschlagbaren Elementenraum begrenzen, durch den der Betriebs-/Hilfsstoff gefördert wird, wobei die Dichtlippen an Ventiltellern der Kolben einen aufgerauten Bereich umschließen.

Die erfindungsgemäß vorgeschlagene Fördereinrichtung mit Ventilbaugruppe nimmt das ansaugseitige Ventil und das druckseitige Ventil auf und begrenzt den Elementenraum. Die Ventilbaugruppe stellt eine Teilkomponente der Fördereinrichtung dar und wird direkt auf einem Aktor, der im vorliegenden Fall bevorzugt als Hubmagnet ausgebildet ist, angeordnet. Die Ventilbaugruppe beinhaltet sämtliche Komponenten des ansaugseitigen Ventils und des druckseitigen Ventils einschließlich von Druckfedern. Die Aufnahmeplatte der Ventilbaugruppe stellt ein Bindeglied zwischen einem Pumpträger und besagtem Hubmagneten dar und verhindert eine Relativbewegung zwischen diesen Komponenten, die sich auf die Förderkennlinie negativ auswirken würde. Die Ventilbaugruppe, insbesondere die Zwischenplatte, welche die Komponenten des ansaugseitigen Ventils sowie des druckseitigen Ventils aufnimmt, ist in vorteilhafter Weise mit zwei stoffschlüssigen Verbindungsnähten mit dem Hubmagneten einerseits und dem Pumpenträger anderseits relaxationsfrei verbunden.

In vorteilhafter Weise sind die in der Aufnahmeplatte der Ventilbaugruppe angeordneten ansaugseitigen und druckseitigen Ventile druckfederbeaufschlagt und werden in die jeweiligen Dichtsitze gedrückt. Dies bietet den Vorteil, dass die Ventile bei zunehmender Druckstärke abdichten.

Mit Hilfe der erfindungsgemäß vorgeschlagenen Fördereinrichtung mit Ventilbaugruppe, insbesondere der Aufnahmeplatte, ist es möglich, eine Dosierpumpe, beziehungsweise eine Fördereinrichtung darzustellen, die auf einen Drucksensor verzichtet. Durch die erfindungsgemäß vorgeschlagene Fördereinrichtung und die darin aufgenommenen ansaugseitigen und druckseitigen Ventile kann eine exakte Fördermenge im Fördersystem zugeführt werden. Eine exakte Ausrichtung der Ventilbaugruppe zum Pumpenträger einerseits sowie zum Hubmagneten andererseits wird mittels beispielsweise dreier Auflagepunkte definiert, die gleichzeitig als Referenzpunkte dienen und die Ebenheit und Parallelität der Ventilbaugruppe zu den angrenzenden Bauteilen d.h. dem Pumpenträger und dem Hubmagneten festlegen.

Die Federkraft der Federn, mit denen die Kolben des ansaugseitigen Ventils sowie des druckseitigen Ventils beaufschlagt sind, ermöglicht eine ausreichende Flächenpressung um zu verhindern, dass beispielsweise der Innendruck einer Tankeinheit zur Bevorratung des Betriebs-/Hilfsstoffes sowie eine mögliche Fahrzeugschiefstellung, eine Leckage und eine damit einhergehende Flutung der Leitungen auftritt. Insbesondere kann das druckseitige Ventil in einem kappenförmig ausgebildeten Führungselement geführt werden, sodass eine Verkantung bei dessen Bewegung durch präzise Ausrichtung verhindert wird. Das kappenförmige Element, insbesondere des druckseitigen Ventils der Ventilbaugruppe dient ferner als Abstützung der Feder des druckseitigen Ventils. Mittels eines Zentrierkragens wird das kappenförmig ausgebildete Führungselement relativ zur Aufnahmeplatte der Ventilbaugruppe positioniert, sodass die Rechtwinkligkeitsvorgabe eingehalten werden kann. Insbesondere ist das druckseitige Ventil, beziehungsweise dessen Ventilteller, der von einer flexiblen Dichtlippe umrahmt wird, bis zur Dichtsitzgeometrie mit einer grobstrukturierten angerauten Oberfläche ausgeführt, sodass bei Druckverformungen des elastischen Elementes keine Öffnungsdurchmesserveränderung auftritt.

Beim ansaugseitigen Ventil, welches ebenfalls in der Aufnahmeplatte der Ventilbaugruppe angeordnet ist, ist in vorteilhafter Weise dafür Sorge getragen, dass sich der Ventilteller des saugseitigen Kolbens beim Öffnen in den Elementenraum hineinbewegt und einen Durchflussquerschnitt freigibt. Durch diese Anordnungsweise wird das Totvolumen minimiert. Beim Totvolumen handelt es sich um ein Volumen, welches noch mit Medium gefüllt ist, sobald die Fördermembrane, die durch den Hubmagneten bewegt wird und den Elementenraum von der Unterseite her begrenzt ihren oberen Totpunkt erreicht. Ziel der erfindungsgemäß vorgeschlagenen Lösung ist es, mit einem möglichst geringen Totvolumen einen Kompressionsdruck so weit zu erhöhen, dass auch bei einem kleinen Hub der Fördermembran Luft angesaugt werden kann. Im Weiteren sind beide Ventile mit einer speziellen Plasmabeschichtung versehen, die ein Anhaften des mit Elastomer benetzten Kolbens zu der aus Thermoplast bestehenden Aufnahmeplatte verhindern soll. Dadurch ist die Erstbefüllung des Gesamtsystems gewährleistet. Unterbliebe eine derartige Beschichtung, erhöhte sich der Öffnungsdruck so weit, dass der Kompressionsdruck mit Luft oder anderen Gasen nicht ausreicht, um die Ventile zu öffnen.

In einer weiteren vorteilhaften Ausgestaltung des der Erfindung zugrunde liegenden Gedankens ist beispielsweise der Kolben des saugseitigen Ventils durch eine Führungsgeometrie geführt, um zum einen den notwendigen Strömungsquerschnitt zur Passage des Betriebs-/Hilfsstoffes darzustellen und zum anderen die Verschmutzungsanfälligkeit zu verringern und ein mit zunehmender Verschmutzung möglicherweise auftretendes Klemmen zu vermeiden.

Des Weiteren weist die Aufnahmeplatte der Ventilbaugruppe im Bereich der Aufnahmeöffnung, beziehungsweise des Aufnahmekragens für das ansaugseitige Ventil und das druckseitige Ventil, umlaufende Nuten auf, in welche zwei Axialformdichtungen, insbesondere ausgestaltet als O-Ringe, eingelegt werden. Beide Dichtungen werden druckunterstützend eingebaut, d.h. bei den beiden Axialformdichtungen erfolgt bei höheren Betriebsdrücken sowohl hinsichtlich Überdruck als auch Unterdrück eine in Radialrichtung wirkende Abstützung. Eine Überdruckabsicherung erfolgt über die Durchmesser, an denen die Axialformdichtungen anliegen. Die Unterstützung bei Unterdrück erfolgt mittels am Umfang angeordneter Rippen. Diese Anordnung der Axial-Formdichtungen in die Aufnahmeplatte eingeformte Nuten sichert einerseits die Abstützung und zum anderen wird durch die verbleibenden Zwischenräume sichergestellt, dass genügend Raum für Quellung und Temperaturgang der aus elastischem Material gefertigten Axialformdichtungen zur Verfügung steht.

### Vorteile der Erfindung

Die erfindungsgemäß vorgeschlagene Fördereinrichtung zeichnet sich dadurch aus, dass durch die Ventilbaugruppe und die in dieser angeordneten ansaugseitigen und druckseitigen Ventile das Totvolumen stark reduziert wird, sodass ein Ansaugen von gasförmigen Medien dargestellt werden kann. Das Ansaugen gasförmiger Medien wie beispielsweise Luft ist wichtig, um die Erstbefüllung zu gewährleisten. Nach Komplettmontage des Systems und Befüllung des Vorratstanks ist die Pumpe noch nicht mit Medium befüllt. Dies bedeutet, dass die Pumpe zunächst eine Luft- oder Gasmenge fördern muss, bis der Betriebs-/Hilfsstoff, d.h. das Reduktionsmittel an die Ventile gelangt.

Aufgrund der unterschiedlichen Oberflächenbeschaffenheit der Ventilteller, die an den dem Elementenraum zuweisenden Enden der Kolben des ansaugseitigen und des druckseitigen Ventils angeordnet sind, wird ein einflussnehmender Durchmesser auf den Öffnungsdruck definiert. Die Ventilteller sind in vorteilhafter weise von flexiblen Dichtlippen umrandet, die alle fertigungsbedingt möglicherweise auftretenden Unebenheiten abdecken und das Ansaugen von Luft einerseits ermöglichen und andererseits das Austreten von Mindermengen während des Pumpbetriebes verhindern, sodass eine Fördermengenabweichung im Gegensatz zu aus dem Stand der Technik bekannten Lösungen sicher ausgeschlossen werden kann.

Sowohl das ansaugseitige wie auch das druckseitige Ventil der Ventilbaugruppe sind federbeaufschlagt ausgebildet, sodass die Schließzeit der Ventile definiert ist, um einen Mengenverlust beim Förderbetrieb zu minimieren.

Durch die erfindungsgemäß vorgeschlagene Lösung werden Lagezentrierungen der Axial-Formdichtungen geschaffen, sodass Relativbewegungen während schwellender Druckzustände innerhalb des Elementenraums beim Förderbetrieb vermieden werden. Um sicherzustellen, dass eine Relativbewegung der Ventilbaugruppe im Druckbetrieb vermieden wird, stellt die Aufnahmeplatte das Bindeglied zwischen dem Pumpenträger und dem Hubmagneten dar, mit welchem sie jeweils über stoffschlüssig ausgebildete Verbindungen relaxationsfrei verbunden wird.

Durch die in den Elementenraum hineinragende Elementenraumrippe wird dessen Volumen wohl definiert, so dass Quell- und Temperatureinflüsse der Fördermembran keinen Einfluss auf das Volumen des Elementenraumes haben. Dadurch wird ein Durchmesser definiert, der über die Lebensdauer konstant bleibt. Des Weiteren kann in den vom Elementenraum abzweigenden Verbindungskanal eine Drossel vorgesehen werden, die in vorteilhafter Weise als Durchmesserverengung gefertigt werden kann. Die Drossel dient der Reduktion von Geräuschemissionen und stellt eine hydraulische Beeinflussung des Strömungsquerschnittes dar. Dadurch wird die Geschwindigkeit des Hubmagneten beeinflusst und somit die Auftreffgeschwindigkeit desselben verlangsamt. Dadurch wiederum kann in vorteilhafter Weise erreicht werden, dass die Lautstärke beim Betrieb des Fördermoduls verringert wird.

Beim druckseitigen Ventil der Ventilbaugruppe kann in vorteilhafter Weise eine Kanalgeometrie geschaffen werden, so dass ein Setzen des druckseitigen Kolbens vermieden wird. Durch diese Geometrie ist beim druckbelastenden der beiden Ventile der Ventilbaugruppe der Wirkdurchmesser stets offen.

### Kurze Beschreibung der Zeichnungen

Anhand der Zeichnungen wird die Erfindung nachstehend eingehender beschrieben.

Es zeigt:
- Figur 1: ein Schaltbild eines Fördersystems zwischen Tankeinheit und einem Dosiermodul,
- Figur 2: eine Darstellung der Fördereinrichtung mit Ventilbaugruppe mit ansaugseitigem und druckseitigem Ventil,
- Figur 3: eine Explosionsdarstellung der Ventilbaugruppe gemäß der Darstellung in Figur 2,
- Figur 4: die Darstellung des ansaugseitigen und des druckseitigen Ventils im Schnitt,
- Figur 5: eine Darstellung des druckseitigen Ventils,
- Figur 6.1: eine Ansicht des Ventiltellers des druckseitigen Kolbens,
- Figur 6.2: die Darstellung einer Kanalgeometrie am Ventilteller des druckseitigen Kolbens,
- Figur 7: eine perspektivische Draufsicht auf die Führungsgeometrie des Kolbens des ansaugseitigen Ventils der Ventilbaugruppe und
- Figur 8: die Darstellung eines kappenförmig ausgebildeten Führungselements zur Darstellung einer im Wesentlichen rechtwinkligen Führung des entsprechenden Kolbens des druckseitigen Ventils.

### Ausführungsvarianten

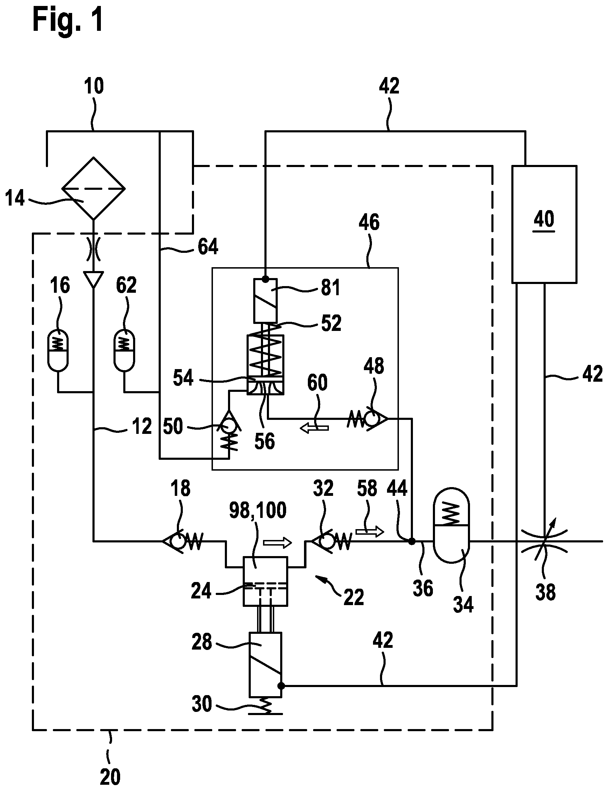

Der Darstellung gemäß Figur 1 ist ein Schaltbild eines Fördersystems für einen Betriebs-/Hilfsstoff mit den wesentlichen Baugruppen zu entnehmen.

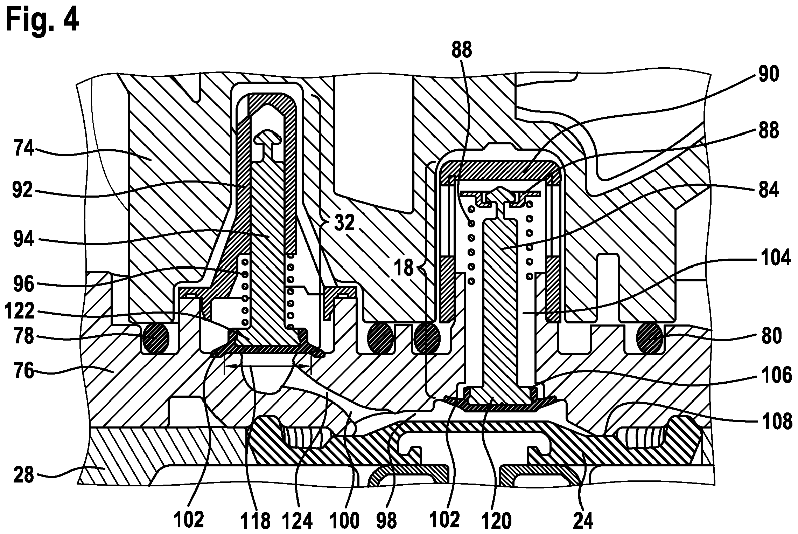

Eine Fördereinrichtung zur Förderung eines Betriebs-/Hilfsstoffes, beispielsweise eines Reduktionsmittels wie einer Harnstoff-Wasserlösung oder Harnstoff, umfasst eine Tankeinheit 10, in der der Betriebs-/Hilfsstoff bevorratet ist. An einer Ansaugleitung 12 befindet sich ein Filter 14. Der Ansaugleitung 12 ist des Weiteren ein erster Eisdruckdämpfer 16 zugeordnet. In der Ansaugleitung 12 befindet sich ein Ansaugventil 18, das als ein federbeaufschlagtes Rückschlagventil ausgeführt ist. Das ansaugseitige Ventil 18 ist zusammen mit einem ebenfalls als federbeaufschlagtes Rückschlagventil gestalteten druckseitigen Ventil 32 in einer Ventilbaugruppe 22 aufgenommen. Die Ventilbaugruppe 22 begrenzt einen Elementenraum 98, 100 siehe Figur 4. Dem Elementenraum 98, 100 strömt der Betriebs-/Hilfsstoff nach Passage des ansaugseitigen Ventiles 18 zu. Der Elementenraum 98,100 ist durch eine Fördermembran 24 beaufschlagt, die ihrerseits mittels eines bestrombaren Hubmagneten 28 betätigt wird. Der Hubmagnet 28 wird durch eine Ansteuereinheit 40 über eine Ansteuerleitung 42 angesteuert. Des Weiteren übernimmt die Ansteuereinheit 40 die Ansteuerung eines Dosiermodules 38, über welches der Betriebs-/Hilfsstoff in den in Figur 1 nicht näher dargestellten Abgastrakt einer Verbrennungskraftmaschine eingespritzt wird. Darüber hinaus hat die Ansteuereinheit 40 die Aufgabe, über eine weitere Ansteuerleitung 42 einen Hubmagneten 81 anzusteuern, über den eine Rücksaugpumpe 46 betätigt wird. Der in den Elementenraum 98,100 einströmende Betriebs-/Hilfsstoff wird über die durch den Hubmagneten 28 betätigte Fördermembran 24 verdichtet, sodass ein Druck aufgebaut wird. Bei Überschreiten des Öffnungsdruckes des druckseitigen Ventiles 32 strömt der Betriebs-/Hilfsstoff in die Dosierleitung 36 ein und in Pumprichtung 58 gesehen, einem Druckpulsationsdämpfer 34 zu. Der Druckpulsationsdämpfer 34 befindet sich in der Dosierleitung 36 unmittelbar vor dem Dosiermodul 38, über welches der Betriebs-/Hilfsstoff in den Abgastrakt der Verbrennungskraftmaschine eingebracht wird.

Wie aus der Darstellung gemäß Figur 1 hervorgeht, befindet sich zwischen der Auslassseite des druckseitigen Ventiles 32 und dem Druckpulsationsdämpfer 34 eine Abzweigstelle 44 eines Rücksaugstutzens, der sich zur Rücksaugpumpe 46 erstreckt. Diese umfasst ein erstes Ventil 48, ferner ein zweites Ventil 50, die analog zum ansaugseitigen Ventil 18 und zum druckseitigen Ventil 32 als federbeaufschlagte Rückschlagventile ausgebildet werden können. Mit Bezugszeichen 60 ist eine Rücksaugrichtung bezeichnet, in welche das Fördersystem, d.h. die Dosierleitung 36, der Druckpulsationsdämpfer 34 und das Dosiermodul 38 im Rücksaugmodus entleert werden können. Der in den erwähnten Komponenten bevorratete Betriebs-/Hilfsstoff kann über die Rücksaugpumpe 46 im Rücksaugmodus unmittelbar über eine Rücksaugleitung 64 wieder in die Tankeinheit 10 zurückgefördert werden.

Wie die Darstellung gemäß Figur 1 weiter zeigt, umfasst die Rücksaugpumpe 46 einen Elementenraum, in dem sich eine Rücksaugfördermembran 54 befindet, die ihrerseits durch einen Hubmagneten 81 betätigt wird. Der Hubmagnet 81 wird via Ansteuerleitung 42 über die Ansteuereinheit 40 betätigt. Die Rücksaugfördermembran 54 ist durch eine Druckfeder 52 beaufschlagt. Die Rücksaugfördermembran 54 schließt oder öffnet einen Dichtsitz 56. Bei Betätigung der Rücksaugpumpe 46 im Rücksaugmodus strömt bei geöffnetem Dichtsitz 56 der rückgesaugte Betriebs-/Hilfsstoff über die zweite Abzweigstelle 44 dem Rücksaugstutzen zu, über das erste Ventil 48 in den Elementenraum 98,100, über das zweite Ventil 50 in die Rücksaugleitung 46 und von dort unter Umgehung des Filters 14 direkt zurück in die Tankeinheit 10.

Über den ersten Eisdruckdämpfer 16, der in der Ansaugleitung 12 angeordnet ist, kann sich bei tiefer Außentemperatur ausdehnender Betriebs-/Hilfsstoff, dessen Ausdehnung in der Größenordnung von 10% liegt, aufgenommen werden. Das ansaugseitige Ventil 18 der Ventilbaugruppe 22 öffnet im Falle eines sich ergebenden Unterdruckes im Elementenraum 98, 100 und lässt den Betriebs-/Hilfsstoff in den Elementenraum 98, 100 einströmen. Im Falle eines noch nicht befüllten Filters 14 beziehungsweise Fördermodules 20 wird zunächst Luft angesaugt und komprimiert. Das ansaugseitige Ventil 18 selbst wird mittels einer Feder bei Druckausgleich zurück in seinen Sitz gedrückt und schließt die Verbindung zur Tankeinheit 10 ab. Bei Druckerhöhung im Elementenraum 98, 100 wird das saugseitige Ventil 18 geschlossen und das druckseitige Ventil 32 geöffnet. Das komplette Hubvolumen wird komprimiert und aus dem Elementenraum 98, 100 unter Druck hinausgefördert. Die Fördermembran 24 wird durch ein Blech unterstützt, sodass bei zunehmendem Druck eine möglichst geringe Verformung der Fördermembran 24 auftritt. Das ansaugseitige Ventil 18 und das druckseitige Ventil 32 sind in der gemeinsamen Ventilbaugruppe 22 aufgenommen. Diese stellt ein Bindeglied zwischen einem Pumpenträger 74 und dem Hubmagneten 28 dar.

Im Fördermodus des Fördermoduls 20 kann gasförmiges Medium aus dem Filter 14 aufgenommen werden. Dies wird anhand einer Stromüberwachung detektiert und zur Vermeidung von Schäden der gesamte Betriebs-/Hilfsstoff mittels Betätigung der Rücksaugpumpe 46 über die zweite Tankanbindungsstelle, d.h. die Abzweigstelle 44 in die Tankeinheit 10 rückgesaugt. Dieser im Rücksaugmodus stattfindende Vorgang vermeidet die Zuführung gasförmiger Medien zum Dosiermodul 38. Ein erheblicher Luft- bzw. Gasanteil im Hydraulikkreis würde ansonsten zu einer Abweichung hinsichtlich der Drucksteuerung führen. Die Abzweigstelle, d.h. der Anschluss des Rücksaugschutzes 44 ist so platziert, dass die zurückgeführte Menge unter Umgehung des Filters 14 unmittelbar in die Tankeinheit 10 zurückgefördert werden kann. Die in Figur 1 dargestellte Rücksaugpumpe 46 fördert bei Stillstand des Fahrzeugs eine definierte Menge des Betriebs- /Hilfsstoffes, d.h. des gefrierfähigen Reduktionsmediums zurück in die Tankeinheit 10, um mögliche Gefrierschädigung aufgrund des sich ausdehnenden Betriebs-/Hilfsstoffes an den Komponenten des Fördersystems zu vermeiden. Um dies zu gewährleisten, wird eine Anordnung gewählt, bei der der Rücksaughubmagnet 81 durch eine Frequenzansteuerung einen Tauchanker mit Rücksaugfördermembran 54 auf- und ab bewegt. Im nicht betätigten Zustand liegt die Rücksaugfördermembran 54 auf dem Dichtsitz 56 und schließt diesen mit ausreichender Dichtkraft gegen den anstehenden Betriebsdruck ab. Vorzugsweise ist eine umlaufende Dichtlippe an der Rücksaugfördermembran 54 vorgesehen. Dadurch, dass die Dichtlippe an der Rücksaugfördermembran 54 vorgesehen ist und nicht am Dichtsitz 56, kann ein Abbild im Werkstoff der Rücksaugfördermembran 54 vermieden werden, sodass sich andernfalls auf längere Sicht einstellende Leckagen ausgeschlossen werden können.

Mittels der Druckfeder 52 wird der Tauchanker mit aufvulkanisierter Rücksaugfördermembran 54 auf den Dichtsitz 56 gemäß der Darstellung in Figur 1 gedrückt.

Wird der Rücksaughubmagnet 81 durch Ansteuerung via Ansteuerleitung 42 von der Ansteuereinheit 40 aus betätigt, wird der Tauchanker mit daran anvulkanisierter Rücksaugfördermembran 54 vom Dichtsitz 56 abgehoben. Im Elementenraum der Rücksaugpumpe 46 entsteht somit ein Unterdrück. Der Unterdrück führt zur Öffnung des ersten Ventiles 48, sodass der Betriebs-/Hilfsstoff in Saugrichtung 60 in die Rücksaugpumpe 46 eintritt. Das erste Ventil 48 umfasst ein Dichtplättchen, welches an zwei Anbindungsstegen eingespannt ist. Durch den anstehenden Unterdrück wird dieses Dichtplättchen geöffnet und der Betriebs-/Hilfsstoff, d.h. das gefrierfähige Reduktionsmedium, kann abströmen.

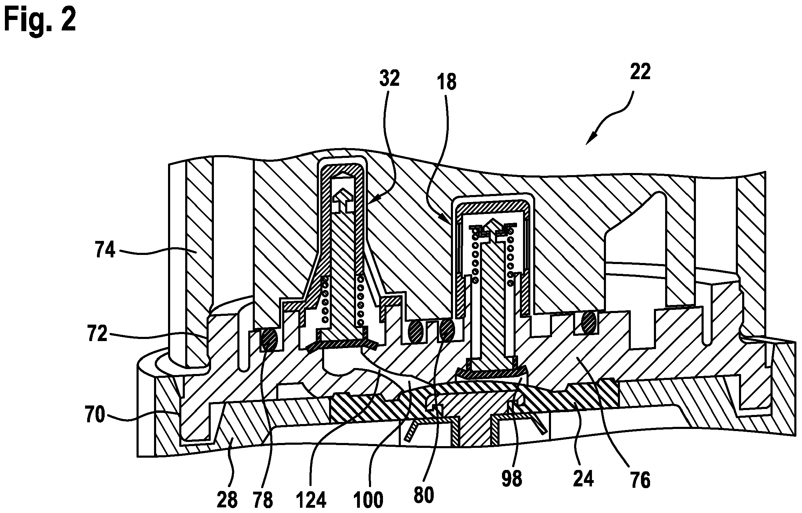

Der Darstellung gemäß Figur 2 ist die Fördereinrichtung mit Ventilbaugruppe 22 im eingebauten Zustand zu entnehmen, die ein druckseitiges und ein ansaugseitiges Ventil umfasst.

Figur 2 zeigt, dass die Ventilbaugruppe 22 im Wesentlichen durch eine Aufnahmeplatte 76 dargestellt ist, in welcher das ansaugseitige Ventil 18 und das druckseitige Ventil 32 eingelassen sind. Die Aufnahmeplatte 76 der Ventilbaugruppe 22 weist an ihrer Außenseite eine erste Anbindungsfläche 70 und eine zweite Anbindungsfläche 72 auf. Entlang der ersten Anbindungsfläche 70 erfolgt eine stoffschlüssige Verbindung der Aufnahmeplatte 76 der Ventilbaugruppe 22 an den Hubmagneten 28, während durch die zweiten Anbindungsfläche 72 eine stoffschlüssige Verbindung zu einem Pumpenträger 74 gegeben ist. Die Aufnahmeplatte 76 wirkt somit als Bindeglied zwischen dem Pumpenträger 74 und dem Hubmagneten 28, über den die Fördermembran 24 betätigt ist. An der ersten Anbindungsfläche 70 und der zweiten Anbindungsfläche 72 werden bevorzugt umlaufende relaxationsfreie Laserschweißnähte ausgebildet, die eine Relativbewegung des Pumpenträgers 74 in Bezug auf den Hubmagneten 28 ausschließen.

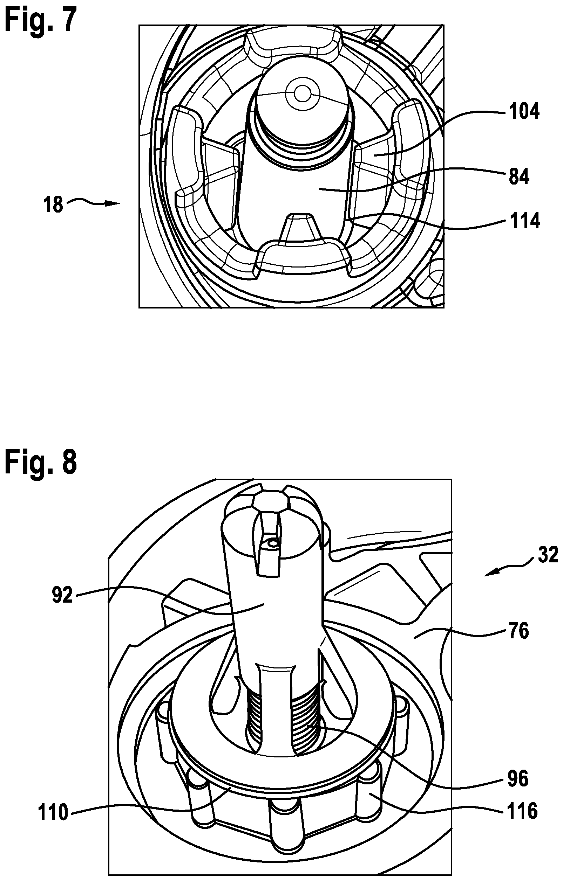

Des Weiteren geht aus der Darstellung gemäß Figur 2 hervor, dass das druckseitige Ventil 32 von einem ersten Dichtring 78 umgeben ist, während ein Ventilkragen in der Aufnahmeplatte 76 am ansaugseitigen Ventil 18 von einem zweiten, aus elastischem Material gefertigten Dichtring 80 umgeben ist. Die beiden Dichtringe 78, 80 sind jeweils in entsprechende umlaufende Nuten, die sich an der oberen Planseite der Aufnahmeplatte 76 der Ventilbaugruppe 22 befinden, eingelassen. Über die beiden Dichtringe 78, 80 ist die Aufnahmeplatte 76 der Ventilbaugruppe 22 gegen den Pumpenträger 74 abgedichtet. In bevorzugter Ausgestaltung werden die Dichtringe 78, 80 zum Pumpenträger 74 druckunterstützt eingebaut. Dies bedeutet, dass bei hohen Betriebsdrücken sowohl hinsichtlich Überdruck als auch hinsichtlich auftretendem Unterdrück eine Abstützung der Dichtringe 78, 80 erfolgt. Eine Überdruckabsicherung erfolgt über die Durchmesser, an denen die Dichtringe 78, 80 anliegen. Die Unterdruckfähigkeit der beiden Dichtringe 78, 80 ist dadurch gegeben, dass am Umfang der Kragen in der Zwischenplatte 76 Unterstützungsrippen 116 vgl. Darstellung gemäß Figur 8, die in radiale Richtung wirken, ausgebildet sind. Diese Anordnung sichert zum einen die Abstützung der Dichtringe 78, 80 und zum anderen wird durch die Zwischenräume in den umlaufenden Nuten sichergestellt, dass genügend Raum für Quellung und Temperaturgang der Dichtringe 78, 80 bei entsprechenden Temperaturen vorliegt.

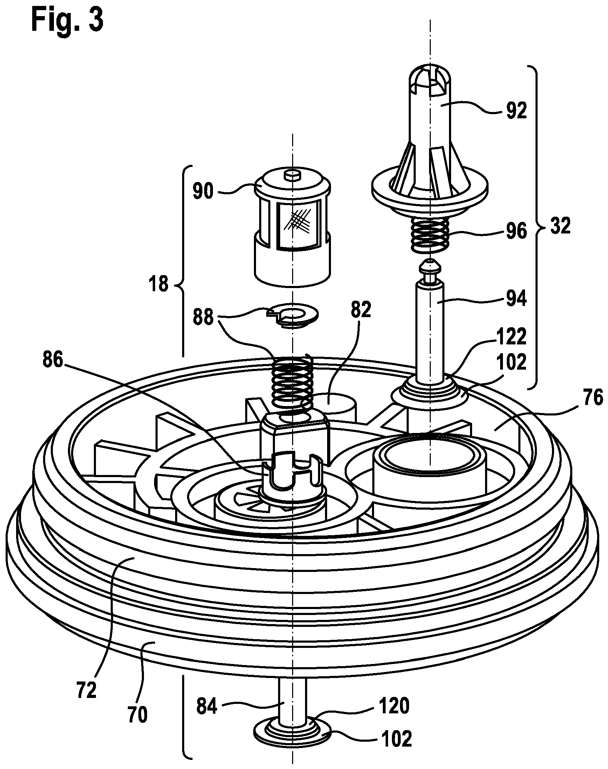

Figur 3 zeigt eine Explosionsdarstellung der Ventilbaugruppe der erfindungsgemäßen Fördereinrichtung gemäß Figur 2. Figur 3 zeigt, dass die Aufnahmeplatte 76 der Ventilbaugruppe 22 an der Außenseite die erste Anbindungsfläche 70 sowie die zweite Anbindungsfläche 72 umfasst. Zentrisch in der Aufnahmeplatte 76 befindet sich ein Aufnahmekragen 86 mit einem Sieb, in welchem das ansaugseitige Ventil 18 montiert wird. Das ansaugseitige Ventil 18 umfasst ein saugseitiges Sieb 90 sowie eine Feder mit Haltescheibe vgl. Position 88. Ein saugseitiger Kolben ist durch Bezugszeichen 84 bezeichnet und umfasst an einem dem Elementenraum 98 bzw. 100 zuweisenden Ende einen ersten Ventilteller 120, der durch eine umlaufende, flexible Dichtlippe 102 umrandet ist.

In gleicher Weise nimmt die Ventilbaugruppe 22, insbesondere die Aufnahmeplatte 76 die Komponenten des druckseitigen Ventiles 32 auf. Zu diesen Komponenten ist ein kappenförmiges Führungselement 92 zu zählen, an welchem sich eine Feder 96 abstützt, die den druckseitigen Kolben 94 beaufschlagt. Der druckseitige Kolben 94 umfasst einen zweiten Ventilteller 122, der ebenfalls von einer aus flexiblem Material gefertigten Dichtlippe 102 umrandet ist. Figur 3 zeigt darüber hinaus mit Bezugszeichen 82 bezeichnete Auflagepunkte, die eine exakte Auflage der Ventilbaugruppe 22 in Ausrichtung zum Pumpenträger 74 und zum Hubmagneten 28 ermöglichen. Die Auflagepunkte 82 dienen gleichzeitig als Referenzpunkte zur Definition von Ebenheit und Parallelität der Ventilbaugruppe 22 in Bezug auf die angrenzenden Bauteile, besagtem Pumpenträger 74 und besagtem Hubmagneten 28, mit dem die Fördermembran 24 betätigt wird.

Figur 4 zeigt eine vergrößerte Darstellung der Ventilbaugruppe im eingebauten Zustand.

Figur 4 ist zu entnehmen, dass die Aufnahmeplatte 76 der Ventilbaugruppe 22 den Elementenraum 98 bildet. Vom Elementenraum 98 zweigt sich durch die Aufnahmeplatte 96 erstreckend, ein Verbindungskanal 100 zum zweiten Ventilteller 122 des druckseitigen Kolbens 94 des druckseitigen Ventiles 32. Der Elementenraum 98 ist an seiner Unterseite durch die Fördermembran 24 begrenzt. Die Fördermembran 24 wird ihrerseits durch den hier nicht näher dargestellten Hubmagneten 28 betätigt. Zur Verminderung der Deformation der Fördermembran 24 bei Hüben ist diese durch ein Blech oder dergleichen unterstützt, um die Deformation der Fördermembran 24 im Betrieb zu begrenzen.

Der Darstellung gemäß Figur 4 ist des Weiteren zu entnehmen, dass sich die Haltescheibe 88 an der sich die den saugseitigen Kolben 84 beaufschlagende Feder abstützt an der Decke des saugseitigen Siebs 90 abstützt. Der erste Ventilteller 120 des saugseitigen Kolbens 84 ist von der flexiblen Dichtlippe 102 umrandet. In der Aufnahmeplatte 76 der Ventilbaugruppe 22 befindet sich ein Kolbenanschlag 106, welcher die Bewegung und damit den Förderhub des saugseitigen Kolbens 84 begrenzt. Wie aus Figur 4 hervorgeht, ragt der erste Ventilteller 120 in den Elementenraum 98 hinein. Der Elementenraum 98 ist hinsichtlich seines Totvolumens minimiert. Das Totvolumen ist das Volumen innerhalb eines Kompressionsraumes, das nicht verdrängt werden kann. Das Totvolumen bleibt nach Durchführung eines jeden Hubes übrig und verhindert eine vollständige Kompression gasförmigen Mediums. Daraus wiederum resultiert eine Verringerung des erzeugbaren Öffnungsdruckes. Daher ist die Minimierung des Totvolumens von Bedeutung.

Vom Elementenraum 98 aus erstreckt sich der Verbindungskanal 100 in Richtung auf den zweiten Ventilteller 122 des druckseitigen Ventils 32, der ebenfalls von einer flexiblen Dichtlippe 102 umrandet ist. Mit Bezugszeichen 118 ist ein Dichtdurchmesser bezeichnet. Der Dichtdurchmesser 118 ist der auf den Öffnungsdruck des druckseitigen Ventiles 32 einflussnehmende Durchmesser. In der Darstellung gemäß Figur 4 liegt der Durchmesser 118 in Bezug auf die flexible Dichtlippe 102 etwas zurückgenommen.

Der Darstellung gemäß Figur 4 lässt sich des Weiteren entnehmen, dass im Verbindungskanal 100, der sich vom Elementenraum 98 zum Druckventil 32 erstreckt, eine Querschnittsverengung 124 ausgebildet werden kann. Dadurch kann die Geschwindigkeit, mit welcher sich der Hubmagnet 28 bewegt, beeinflusst werden, so dass sich die Auftreffgeschwindigkeit des Hubmagneten 28 verringert und somit die Lautstärke der gesamten Fördereinheit im Betrieb positiv beeinflusst wird.

Der Darstellung gemäß Figur 4 ist des Weiteren zu entnehmen, dass die Abdichtung zwischen dem Pumpenträger 94 und der Aufnahmeplatte 76 der Ventilbaugruppe 22 durch die Dichtringe 78 bzw. 80 erfolgt. Diese liegen in entsprechend umlaufend ausgebildeten Nuten, abgestützt durch in Figur 4 nicht näher dargestellte Unterstützungsrippen 116, die im Falle des Auftretens von Unterdrück die Formstabilität der ringförmig ausgebildeten Dichtringe 78, 80 gewährleisten.

Die Kraft, die durch die Federn 96 bzw. 88 auf die Kolben 84, 94 ausgeübt wird, baut eine ausreichende Flächenpressung auf, um zu verhindern, dass ein Tankinnendruck des in der Tankeinheit 10 bevorrateten Betriebs-/Hilfsstoffes sowie eine mögliche Fahrzeugschiefstellung eine Leckage und eine damit einhergehende Flutung der Leitungen bewirken können.

Insbesondere ist, wie der Darstellung gemäß Figur 4 des Weiteren entnommen werden kann, der Kolben 94 des druckseitigen Ventils 32 in einem kappenförmig ausgebildeten Führungselement 92 geführt. Dieses kappenförmige Führungselement 92 wird insbesondere mit dem Pumpenträger 94 stoffschlüssig verbunden, sodass sich eine präzise Ausrichtung hinsichtlich der Rechtwinkligkeit und einer damit einhergehenden präzisen Führung des druckseitigen Kolbens 94 des druckseitigen Ventils 32 erreichen lässt. Das kappenförmige Element 92 dient gleichzeitig als Abstützung der Feder 96.

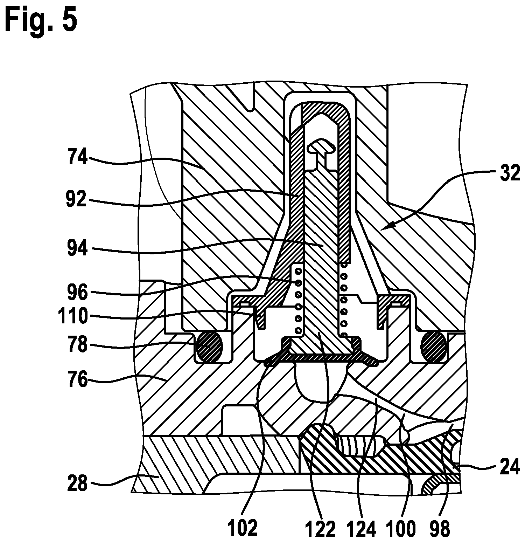

Figur 5 zeigt eine Schnittdarstellung durch das druckseitige Ventil der Ventilbaugruppe der erfindungsgemäßen Fördereinrichtung.

Figur 5 zeigt, dass der druckseitige Kolben 94 im kappenförmig ausgebildeten Führungselement 92 zur Unterstützung der rechtwinkligen Führung, d.h. einer reibungsarmen Führung, mit dem Pumpenträger 74 verbunden, insbesondere stoffschlüssig mit diesem verbunden, beispielsweise verschweißt ist. Im kappenförmigen Führungselement 92 stützt sich die Feder 76 ab, die den zweiten Ventilteller 122 des druckseitigen Kolbens 94 beaufschlagt. Ein Zentrierkragen 110 positioniert das kappenförmig ausgebildete Führungselement 92 relativ zur Aufnahmeplatte 76 und erhöht damit die Rechtwinkligkeitsvorgabe, d.h. legt die Lage fest, in der das kappenförmige Führungselement 92 stoffschlüssig mit dem Pumpenträger 94 verbunden wird. Figur 5 ist des Weiteren zu entnehmen, dass die flexible Dichtlippe 102 den Zweitventilteller 122 des druckseitigen Kolbens 94 umfänglich umschließt und aufgrund ihrer Flexibilität alle auftretenden Unebenheiten abdeckt und somit das Ansaugen von Luft ermöglicht und das Ausströmen von Mindermengen während des Förderbetriebes minimiert. Durch besagte Feder 96, welche den druckseitigen Kolben 94 des druckseitigen Ventils 32 beaufschlagt ist eine definierte Schließzeit des druckseitigen Ventils 32 gegeben, sodass ein Mengenverlust im Förderbetrieb minimiert werden kann.

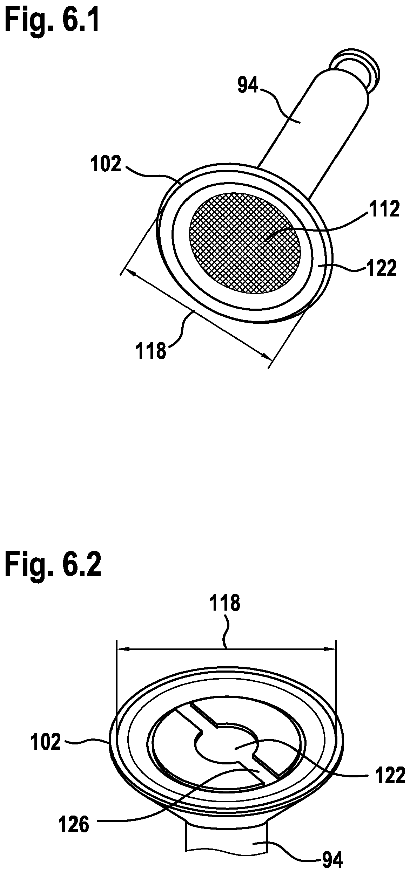

Der Darstellung gemäß Figur 6.1 ist die Ansicht eines Ventiltellers zu entnehmen, der dem Elementenraum zuweist.

Figur 6.1 zeigt, dass hier am Beispiel des druckseitigen Kolbens 94 der zweite Ventilteller 122 einen aufgerauten Bereich 112 umfasst. Der aufgeraute Bereich 112 an der Unterseite des zweiten Ventiltellers 122 ist von der aus flexiblem Material gefertigten Dichtlippe 102 umrandet. In Figur 6.1 ist der einflussnehmende Durchmesser, d.h. der Dichtdurchmesser mit Bezugszeichen 118 identifiziert. Durch das Setzverhalten der flexiblen Dichtlippe 102 in Bezug auf den Durchmesser des Verbindungskanales 100, kann der einflussnehmende Durchmesser, d.h. der Dichtdurchmesser 118 verringert werden, woraus sich ein Anstieg des Öffnungsdruckes am Druckventil 32 ergeben würde. Um genau dies zu vermeiden, wird eine Kanalgeometrie 126, vergleiche Darstellung gemäß Figur 6.2, vorgesehen, durch welche das Medium, d.h. im vorliegenden Falle der Betriebs-/Hilfsstoff bis an den einflussnehmenden Durchmesser, d.h. an den Durchmesser 118 transportiert werden kann.

Figur 6.2 zeigt den Verlauf der Kanalgeometrie 126 in der Fläche des zweiten Ventiltellers 122 am Druckventil 32 der Ventilbaugruppe 22. Auch in Figur 6.2 ist der einflussnehmende Durchmesser, d.h. der Dichtdurchmesser mit Bezugszeichen 118 angedeutet. Dieser liegt im Bereich des Materials der flexiblen Dichtlippe 102.

Figur 7 zeigt die Konfiguration einer Führungsgeometrie der Aufnahmeplatte der Fördereinrichtung mit Ventilbaugruppe zur Führung eines saugseitigen Kolbens.

Wie der Darstellung gemäß Figur 4 entnommen werden kann, kann die Führung des saugseitigen Kolbens 84 des ansaugseitigen Ventiles 18 durch eine Führungsgeometrie 104 besonders reibungsarm gestaltet werden. Dazu ist im Bereich des ansaugseitigen Ventiles 18 - was selbstverständlich auch für das druckseitige Ventil 32 Geltung hat - eine Führungsgeometrie 104 vorgesehen, die beispielsweise eine Anzahl von Führungsrippen umfasst. Die Führungsrippen können in einer90°-Teilung odereiner 120°-Teilung, die Mantelfläche des saugseitigen Kolbens 84 umgebend ausgebildet sein, so dass dieser sehr reibungsarm geführt wird. Die Führungsgeometrie 104 bildet mit dem saugseitigen Kolben 84 insbesondere dessen Mantelfläche sowie dem dem Elementenraum 98 zuweisenden ersten Ventilteller 120 einen Durchströmungsquerschnitt 114, welchen bei geöffnetem Ansaugventil 18 der Betriebs-/Hilfsstoff passiert.

Der Darstellung gemäß Figur 8 ist eine Unterstützungsrippengeometrie für ein Dichtelement zu entnehmen.

Figur 8 zeigt, dass das druckseitige Ventil 32 das mit dem Pumpenträger 74 insbesondere stoffschlüssig verbindbare kappenförmig ausgebildete Führungselement 92 umfasst. An diesem stützt sich die Feder 96 ab, die ihrerseits den durch das kappenförmige Führungselement 92 verdeckten druckseitigen Kolben 94 beaufschlagt. An der kragenförmigen Geometrie, die im Bereich der Aufnahme des druckseitigen Ventils 32 in der Aufnahmeplatte 76 ausgebildet ist, erstrecken sich in radialer Richtung jeweils vorspringend Unterstützungsrippen 116. Bei einem Unterdrück dienen diese sich in die radiale Richtung erstreckenden Unterstützungsrippen 116, dazu, das Dichtelement 78 in Form zu halten. Gleiches gilt mutatis mutantis für das zweite Dichtelement 80, welches sich am ansaugseitigen Ventil befindet und dort ebenfalls in einer um einen kragenförmigen Ansatz umlaufenden Nut untergebracht ist.

Bei der erfindungsgemäß vorgeschlagenen Fördereinrichtung lässt sich durch die Ventilbaugruppe 22 ein Totvolumen stark reduzieren, sodass eine Ansaugung gasförmiger Medien dargestellt werden kann. Ein einflussnehmender Durchmesser 118 in Bezug auf den Öffnungsdruck wird durch die unterschiedliche Oberflächenbeschaffenheit der Ventilteller insbesondere eines aufgerauten Bereiches 112 definiert. Die flexiblen Dichtlippen 102, die sich am Umfang der Ventilteller 120, 122 befinden decken alle fertigungs- oder montagebedingt auftretenden Unebenheiten an der Aufnahmeplatte 76 ab und ermöglichen damit einerseits das Ansaugen von Luft und andererseits das Ausströmen von Mindermengen während des Förderbetriebs. Durch den Einsatz der Druckfedern 88, 96 ist in vorteilhafter Weise eine Definition der Schließzeiten des ansaug- und des druckseitigen Ventiles 18 bzw. 32 gegeben, sodass ein Mengenverlust im Förderbetrieb minimiert ist. Das Volumen des Elementenraumes lässt sich in vorteilhafter Weise durch die Elementraumrippe 108 definieren, sodass der dynamische vom statisch dichtenden Bereich getrennt werden kann. Die Dichtringe 78 bzw. 80 werden in sicherer Lage zentriert, es ist für eine Vermeidung von Relativbewegungen während schwellender Druckzustände im Elementenraum 98, 100 Sorge getragen. Um eine Relativbewegung der Ventilbaugruppe 22 im Druckbetrieb zu vermeiden, dient die Aufnahmeplatte 76 der Ventilbaugruppe 22 als Bindeglied zwischen dem Pumpenträger 74 und dem Hubmagneten 28. Die Rippenanordnung der Führungsgeometrie 104 reduziert den Reibungswiderstand beim Führen der Kolben 84, 94 signifikant. Das kappenförmig ausgebildete Führungselement 92, welches bevorzugt stoffschlüssig mit der Aufnahmeplatte 76 verbunden ist, definiert die Rechtwinkligkeit der Führungsachse zumindest des ansaugseitigen Kolbens 84 in Bezug auf die Dichtfläche.

## Patentansprüche

1. Fördereinrichtung zum Eindosieren eines Betriebs-/Hilfsstoffes in einen Abgastrakt einer Verbrennungskraftmaschine mit einer Ventilbaugruppe (22, 76) mit einem ansaugseitigen Ventil (18) und einem druckseitigen Ventil (32), die jeweils federbeaufschlagte Kolben (84, 94) aufweisen, wobei die Kolben (84, 94) jeweils flexible Dichtlippen (102) aufweisen und einen durch eine Fördermembran beaufschlagbaren Elementenraum (98, 100) begrenzen, durch den der Betriebs-/Hilfsstoff gefördert wird, **dadurch gekennzeichnet, dass** die Dichtlippen (102) an Ventiltellern (120, 122) der Kolben (84, 94) einen aufgerauten Bereich (112) umschließen.

2. Fördereinrichtung gemäß Anspruch 1, **dadurch gekennzeichnet, dass** zumindest der Kolben (84) des ansaugseitigen Ventils (18) mit einem in einer Aufnahmeplatte (76) der Ventilbaugruppe (22) ausgebildeten Anschlag (106) zusammenwirkt.

3. Fördereinrichtung gemäß einem der vorhergehenden Ansprüche, **dadurch gekennzeichnet, dass** eine bzw. die Aufnahmeplatte (76) der Ventilbaugruppe im Bereich einer Aufnahmenut für einen ersten Dichtring (78) in radialer Richtung ausgeführte Unterstützungsrippen (116) aufweist.

4. Fördereinrichtung gemäß einem der vorhergehenden Ansprüche, **dadurch gekennzeichnet, dass** ein einen Öffnungsdruck beeinflussender Durchmesser (118) durch unterschiedliche Oberflächenbeschaffenheit (112, 102) der Dichtgeometrie festgelegt ist.

5. Fördereinrichtung gemäß einem der vorhergehenden Ansprüche, **dadurch gekennzeichnet, dass** die Kolben (84, 94) in einer Führungsgeometrie (104) in einer bzw. der Zwischenplatte bzw. Aufnahmeplatte (76) der Ventilbaugruppe zur Reduktion des Reibungswiderstandes geführt sind.

6. Fördereinrichtung gemäß Anspruch 5, **dadurch gekennzeichnet, dass** die Führungsgeometrie eine Anzahl von Führungsrippen (104) umfasst, die sich in axialer Richtung parallel zu den Symmetrieachsen der Kolben (84, 94) in der Aufnahmeplatte (76) erstrecken.

7. Fördereinrichtung gemäß einem der vorhergehenden Ansprüche, **dadurch gekennzeichnet, dass** ein kappenförmiges Führungselement (92) zumindest des druckseitigen Ventils (32) stoffschlüssig mit einem Pumpenträger (74) zur Definition der rechtwinkligen Ausrichtung des rückseitigen Kolbens (94) in Bezug auf die Dichtfläche ist.

8. Fördereinrichtung gemäß einem der vorhergehenden Ansprüche, **dadurch gekennzeichnet, dass** in einem Verbindungskanal (100), der sich von dem Elementenraum (98) in Richtung des zweiten Ventiltellers (122) des Druckventiles (32) erstreckt, eine als Drossel wirkende Querschnittsverengung (124) ausgeführt ist.

9. Fördereinrichtung gemäß einem der vorhergehenden Ansprüche, **dadurch gekennzeichnet, dass** am zweiten Ventilteller (122) des Druckventiles (32) eine Kanalgeometrie (126) ausgebildet ist.

10. Fördereinrichtung nach Anspruch 1, **dadurch gekennzeichnet, dass** der Elementenraum (98, 100) von einer Fördermembran (24) und den Ventiltellern (120, 122) der Kolben (84, 94) begrenzt ist und einen Verbindungskanal (100) umfasst.

11. Fördereinrichtung gemäß Anspruch 1, **dadurch gekennzeichnet, dass** das Volumen des Elementenraums (98, 100) durch eine in diesen hineinragende Elementenraumrippe (108) definiert ist.

## Claims

1. Delivery device for dosing an operating/auxiliary medium into an exhaust tract of an internal combustion engine, having a valve assembly (22, 76) which has an intake-side valve (18) and has a pressure-side valve (32), which valves have respective spring-loaded pistons. (84, 94), wherein the pistons (84, 94) have respective flexible sealing lips (102) and delimit an element space (98, 100) which is able to be subjected to pressure by a delivery diaphragm and through which the operating/auxiliary medium is delivered, **characterized in that** the sealing lips (102), on valve plates (120, 122) of the pistons (84, 94), surround a roughened region (112).

2. Delivery device according to Claim 1, **characterized in that** at least the piston (84) of the intake-side valve (18) interacts with a stop (106) formed in a receiving plate (76) of the valve assembly (22).

3. Delivery device according to either of the preceding claims, **characterized in that** a or the receiving plate (76) of the valve assembly, in the region of a receiving groove for a first sealing ring (78), has support ribs (116) which are formed in a radial direction.

4. Delivery device according to one of the preceding claims, **characterized in that** a diameter (118) which influences an opening pressure is defined by way of different conditions of the surface (112, 102) of the sealing geometry.

5. Delivery device according to one of the preceding claims, **characterized in that** the pistons (84, 94) are guided in a guide geometry (104) in a or the intermediate plate or receiving plate (76) of the valve assembly for reducing the friction resistance.

6. Delivery device according to Claim 5, **characterized in that** the guide geometry comprises a number of guide ribs (104) which extend in an axial direction parallel to the axes of symmetry of the pistons (84, 94) in the receiving plate (76).

7. Delivery device according to one of the preceding claims, **characterized in that** a cap-shaped guide element (92) at least of the pressure-side valve (32) is in a materially bonded manner to a pump carrier (74) for the purpose of defining the right-angled orientation of the rear-side piston (94) in relation to the sealing surface.

8. Delivery device according to one of the preceding claims, **characterized in that**, in a connecting channel (100) extending from the element space (98) in the direction of the second valve plate (122) of the pressure valve (32), a cross-sectional narrowing (124) which acts as a throttle is formed.

9. Delivery device according to one of the preceding claims, **characterized in that** a channel geometry (126) is formed on the second valve plate (122) of the pressure valve (32).

10. Delivery device according to Claim 1, **characterized in that** the element space (98, 100) is delimited by a delivery diaphragm (24) and the valve plates (120, 122) of the pistons (84, 94) and comprises a connecting channel (100).

11. Delivery device according to Claim 1, **characterized in that** the volume of the element space (98, 100) is defined by an element space rib (108) which projects into said element space.

## Revendications

1. Dispositif de refoulement pour le dosage de matières consommables dans un système de gaz d'échappement d'un moteur à combustion interne, comprenant un module de soupape (22, 76) avec une soupape côté aspiration (18) et une soupape côté pression (32), lesquelles présentent chacune des pistons sollicités par ressort (84, 94), les pistons (84, 94) présentant chacun des lèvres d'étanchéité flexibles (102) et limitant un espace d'élément (98, 100) pouvant être sollicité par une membrane de refoulement, à travers lequel la matière consommable est refoulée, **caractérisé en ce que** les lèvres d'étanchéité (102) au niveau de plateaux de soupapes (120, 122) des pistons (84, 94) entourent une région rugueuse (112).

2. Dispositif de refoulement selon la revendication 1, **caractérisé en ce qu'**au moins le piston (84) de la soupape côté aspiration (18) coopère avec une butée (106) réalisée dans une plaque de réception (76) du module de soupape (22).

3. Dispositif de refoulement selon l'une quelconque des revendications précédentes, **caractérisé en ce qu'**une ou la plaque de réception (76) du module de soupape présente, dans la région d'une rainure de réception pour une première bague d'étanchéité (78) des nervures de support (116) réalisées dans la direction radiale.

4. Dispositif de refoulement selon l'une quelconque des revendications précédentes, **caractérisé en ce qu'**un diamètre (118) influençant une pression d'ouverture est défini par différentes configurations de surface (112, 102) de la géométrie d'étanchéité.

5. Dispositif de refoulement selon l'une quelconque des revendications précédentes, **caractérisé en ce que** les pistons (84, 94) sont guidés dans une géométrie de guidage (104) dans une ou dans la plaque intermédiaire ou la plaque de réception (76) du module de soupape pour réduire la résistance au frottement.

6. Dispositif de refoulement selon la revendication 5, **caractérisé en ce que** la géométrie de guidage comprend une pluralité de nervures de guidage (104) qui s'étendent dans la direction axiale parallèlement aux axes de symétrie des pistons (84, 94) dans la plaque de réception (76).

7. Dispositif de refoulement selon l'une quelconque des revendications précédentes, **caractérisé en ce qu'**un élément de guidage en forme de capuchon (92) au moins de la soupape côté pression (32) est par liaison de matière avec un support de pompe (74) pour définir l'orientation à angle droit du piston du côté arrière (94) par rapport à la surface d'étanchéité.

8. Dispositif de refoulement selon l'une quelconque des revendications précédentes, **caractérisé en ce qu'**un rétrécissement de section transversale (124) agissant en tant qu'étranglement est réalisé dans un canal de liaison (100) qui s'étend depuis l'espace d'éléments (98) dans la direction du deuxième plateau de soupape (122) de la soupape de pression (32).

9. Dispositif de refoulement selon l'une quelconque des revendications précédentes, **caractérisé en ce qu'**une géométrie de canal (126) est réalisée au niveau du deuxième plateau de soupape (122) de la soupape de pression (32).

10. Dispositif de refoulement selon la revendication 1, **caractérisé en ce que** l'espace d'éléments (98, 100) est limité par une membrane de refoulement (24) et par les plateaux de soupape (120, 122) des pistons (84, 94) et comprend un canal de liaison (100) .

11. Dispositif de refoulement selon la revendication 1, **caractérisé en ce que** le volume de l'espace d'éléments (98, 100) est défini par une nervure d'espace d'éléments (108) pénétrant dans celui-ci.
